# EUROPEAN PATENT APPLICATION

(11) **EP 0 921 483 A2**
(43) Date of publication of application: **09.06.1999**
(21) Application number: 98117756.1
(22) Date of filing: 18.09.1998
(51) Int. Cl.: G06F 17/60

(54) **Method for optimizing the location of transport lodgement relating to manufacturing of products**

(30) Priority: 18.09.1997 JP 25339297
(71) Applicant: KABUSHIKI KAISHA TOSHIBA, Kawasaki-shi (JP)
(72) Inventor: Takeyama, Norio, 1-1 Shibaura 1-chome Minato-ku Tokyo 105 (JP); Kobayashi, Hideki, 1-1 Shibaura 1-chome Minato-ku Tokyo 105 (JP); Shimada, Hideki, 1-1 Shibaura 1-chome Minato-ku Tokyo 105 (JP); Kagami, Hideyo, 1-1 Shibaura 1-chome Minato-ku Tokyo 105 (JP); Doi, Seizo, 1-1 Shibaura 1-chome Minato-ku Tokyo 105 (JP)
(74) Representative: HOFFMANN - EITLE

(57) **Abstract**

A method for optimizing locations of transport lodgments relating to manufacturing of a product, comprising a first step (S9) of calculating loads that transport relating to the product applies to environment, the transport being conducted among transport lodgments (A, B, C, D, E, F), and a second step (S5) of optimizing locations of the transport lodgments to reduce the loads applied to the environment.

## Description

The present invention relates to a method for assessing locations of transport lodgments such as manufacturing lodgments, distribution lodgments and treatment lodgments relating to manufacturing of products. The present invention relates to, in particular, a method for optimizing transport lodgments based on a life cycle assessment (to be referred to as "LCA" hereinafter) method.

In recent years, as people voice global environmental issues more frequently, they demand more strongly that production be carried out in consideration of not only the production stage but also the product-turned waste disposal and recycle stage. Compared to the circulation of the human blood, it is demanded that the "recycling-oriented" product life cycle in which not only the one-way flow of products from "artery" to "vein" but also the return of wastes from "vein" to "artery" be considered.

The "artery" means a production stage and a distribution stage in the product life cycle. Specifically, they are cycles in which materials are acquired, parts are made out of the materials, the resultant parts are transferred to an assembly factory and made into a product and the completed product is distributed to a consumer. The "vein" here means a waste disposal/recycle stage. Specifically, after products have been bought by consumers, they are used, abandoned as wastes, transferred to a waste disposal facility for separation between recyclable materials and non-recyclable materials. If the product-turned waste is recyclable, it is reused. If non-recyclable, it is incinerated or land-filled.

It is becoming imperative globally to establish such a "recycling-oriented" product life cycle and to design such products as to reduce loads that the product life cycle may apply to the earth as much as possible. It is also an obligation imposed to manufacturers and consumers to cooperate in this approach.

It is therefore an object of the present invention to provide a method for optimizing locations of the lodgments of a transport route while taking account of the loads which the selection of the transport route relating, in particular, to production in the above-stated "circulatory" life cycle may impose on the environment.

Namely, according to the conventional concept of production and design, factory construction places (manufacturing lodgments) and lodgments for product delivery (distribution lodgments) are reviewed and selected from the viewpoint of minimizing distribution costs taken until products are delivered to end users.

However, as global environment issues and the exhaustion of fossil energy resources become important challenges for people, it is necessary to select production lodgments and distribution lodgments and then to determine a transport route while taking account of the "recycling-oriented" life cycle including vein industries as well as the life cycle assessment, that is, to minimizing environmental loads. The present invention has been made based on such public voices.

In addition, the object of the present invention is, if described in more detail, to obtain effects of not only reducing environmental loads but also, as a result of a reduction in environmental loads, reducing transport costs, relaxing traffic backup and curbing air pollution by assessing and optimizing locations of, for example, manufacturing lodgments, distribution lodgments and treatment lodgments in the above-stated "circulatory" life cycle while taking account of the environmental loads.

The present invention has been made to achieve the object and relates to a method for optimizing locations of transport lodgments relating to manufacturing of a product, comprising: a first step of calculating loads that transport relating to the product applies to environment, the transport being conducted among transport lodgments; and a second step of optimizing locations of the transport lodgments to reduce the loads applied to the environment.

With such an arrangement, it is possible to optimize the locations of the transport lodgments in view of life cycle assessment.

Here, it is preferable that the transport lodgments optimized in the second step include at least a manufacturing lodgment and a distribution lodgment; and in the second step, a location of at least one of the manufacturing lodgment and the distribution lodgment is obtained by an optimization method to reduce the loads that the transport relating to the product applies to the environment.

Additionally, it is preferable that transport lodgments include at least a manufacturing lodgment, a distribution lodgment and a waste disposal and recycle lodgment to dispose of and recycle the product; and in the second step, a location of at least one of the manufacturing lodgment, the distribution lodgment and the waste disposal and recycle lodgment is obtained by an optimization method to reduce the loads that the transport relating to the product applies to the environment.

It is possible to input a location of a proposed manufacturing lodgment located closely to a consumption region in advance, and to obtain a location of the distribution lodgment or the waste disposal and recycle lodgment by the optimization method to reduce the loads that the transport relating to the product applies to the environment, based on the location of the proposed manufacturing lodgment.

The optimization method in the second steps, if conducted by optimization control based on the genetic algorithm, can provide a calculation result appropriately at high-speed.

The first step includes: a step of calculating a transport distance of a transport route connecting the transport lodgments; and a step of obtaining an amount of an environmental load factor emitted by transport means based on transport capacity and the transport means and of calculating loads applied to the environment based on the amount of the environmental load factor.

In this case, the first step preferably includes a step of assessing the economical efficiency of the transport route connecting the transport lodgments. In the economical efficiency assessment step, it is preferable that economical efficiency is assessed with reference to data on transport time relative to the transport distance.

By conducting such economical efficiency assessment, environmental loads can be assessed more appropriately.

The method further comprising a step of assessing a productivity cost based on a location of a manufacturing lodgment from among the transport lodgments to optimize the transport lodgment prior to the second step.

If production costs increase in order to reduce environmental loads, this unfavorably imposes a heavier burden on consumers as well as companies involved. Considering this, it is effective to assess productivity costs prior to the environmental load-basis assessment.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view for describing the present invention and for describing the future product life cycle of environmental load reduction type and a distribution route;
FIG. 2 is a view for describing the conventional product life cycle and distribution route;
FIG. 3 is a view for describing the present invention and is a flow chart showing an example of procedures for location assessment according to the present invention;
FIG. 4 is a view for describing the present invention and is a block diagram showing an example of the structure of genetic algorithm (GA) optimization control according to the present invention;
FIG. 5 is a view for describing the present invention, and for describing the concept of the GA used in the present invention;
FIG. 6 is a view for describing the present invention, and for showing an example of transport conditions for lodgment-to-lodgment transport used in the present invention;
FIG. 7 is a view for describing the present invention, and for showing an example of environmental load data on transport trucks used in calculation according to the present invention;
FIG. 8 is a view for describing the present invention, and for describing the assessment result of the present invention;
FIG. 9 is a view for describing the present invention, and shows a prior art as a comparison for helping easily describe the effects and advantages of the present invention;
FIG. 10 is a view for describing an calculation example of the transport distance and emission amounts of environmental pollutants caused by the transport with transport means in the configuration of FIG. 9;
FIG. 11 is a view for describing the present invention, and for describing an optimization example obtained by the execution of the present invention; and
FIG. 12 is a view for describing the present invention, and for specifically describing an example of calculating the transport distance and environmental pollutants caused by the transport with the transport means in FIG. 11.

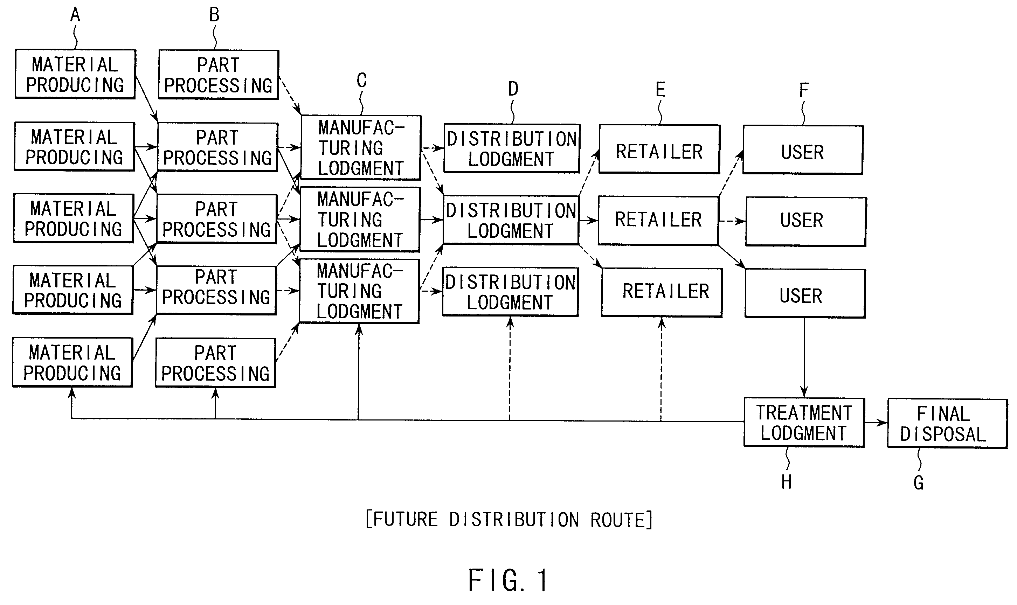

One embodiment according to the present invention will now be described with reference to FIGS. 1 through 12.

In this embodiment, after assessing and optimizing transport lodgments based on the present invention, a transport route will be established such that transport lodgments, such as manufacturing lodgments and distribution lodgments, are located adjacent to locations in which products are consumed. That is, in this embodiment, same types of products are produced in a plurality of production lodgments, the resultant products are distributed within an area in which the production lodgments are located, separation treatment is conducted at treatment lodgments in that area in a waste disposal stage and recycling (or reusing) recyclable materials and parts at part factories and product factories, thereby establishing a product life cycle path.

In assessing and selecting proposed production and manufacturing lodgments during the establishment course, such optimum production and distribution lodgments as to be capable of minimizing environmental pollutants emitted by transport means used for transporting, for example, materials, parts and products are proposed while considering their relationship with all other stages in the above-stated life cycle. More specifically, such optimum locations as to minimize environmental loads are determined and presented while considering distribution costs. In optimization calculation, use of, for example, a genetic algorithm (GA) is intended to provided appropriate and high-speed calculation results.

In view of the above aspect, manufacturing and distribution lodgments are optimized, that is, the distribution system is optimized. As a result of optimization, not only a reduction in loads that products may apply to the environment but also a reduction in transport costs, the relaxation of traffic backup and the curbing of air pollution can be realized. It also possible to expect that crisis management measures at the time of, for example, outbreak of disaster can be taken and that the development of regional industries can be promoted due to the pluralization of part procurement and manufacturing lodgments.

First, description will be given to what is the production and distribution system of environmental loads reduction type like at which the present invention aims, while comparing it with the conventional system.

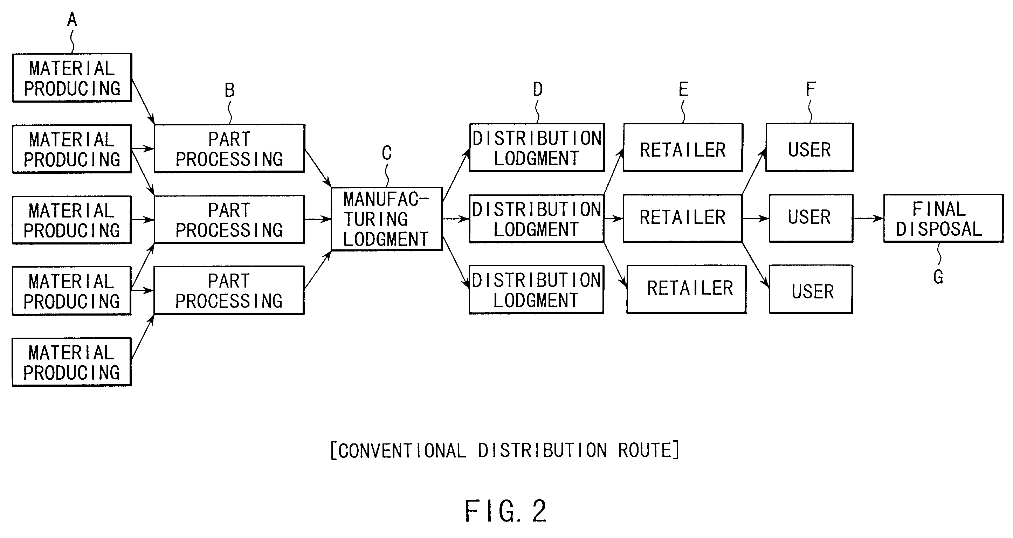

FIG. 2 is an explanatory view in which the conventional product life cycle is conceptually shown. The process of acquiring materials is not shown therein. Here, reference numeral A denotes a material producing stage, B denotes a part manufacturing stage in which desired parts are manufactured using the materials, C denotes a production lodgment at which desired products are manufactured using the processed parts, D denotes central and local distribution lodgments (distribution storages) at which manufactured products are gathered, E denotes retailer stage which is the final distribution destination to which the products are distributed from the manufacturing lodgments, F denotes a user stage in which users buy products from retailers and use or consume them, and G denotes a waste disposal stage for finally disposing of the used products.

A raw material is processed into a material in the material producing stage A and transferred to the part manufacturing stage B by transport means such as a truck. In the part manufacturing stage B, desired parts are manufactured using the material. The parts thus manufactured are transported to a manufacturing lodgment C using transport means such as a truck. Specifically, the parts manufactured at part factories which are scattered are gathered into the manufacturing lodgment C which is the final assembly factory with transport means such as a truck. At the manufacturing lodgment C, desired products are manufactured using the parts thus manufactured and transported. The manufactured products are gathered into the central and local distribution lodgments D by transport means such as trucks for them to reach users.

In accordance with orders from retailers, products are delivered to the retailer stage E, which is the final distribution destination from the distribution lodgments D, by transport means such as trucks and the products are put on sale. The user F buys a product from a retailer and uses it. The product bought by the user is used by the user and turns into a waste when its service life expires. The product-turned waste is transferred to the waste disposal stage G for finally disposing the used products or wastes from the user. In this stage, a waste collection vehicle such as a garbage wagon and a truck is used as transport means. The waste disposal stage G indicates a local autonomy's waste incinerator (scavengery factory) and waste land-filling place. The wastes are incinerated at the scavengery factory or carried to the waste land-filling place and land-filled.

In the waste disposal stage G, not all of wastes are disposed of even in the conventional system. Instead, recyclable (or reusable) materials such as aluminum, ferrous metal and glass are separated from non-recyclable ones and recycled, thereby returning to raw materials. However, in the current production flow, recycle is not always successfully conducted due to collection and processing costs.

In the above-stated life cycle, energy is consumed in each stage of transport, production, treatment stages. The energy is petroleum energy or electric energy (by, for example, petroleum thermal power generation, nuclear power generation, hydraulic power generation). Energy consumption or, in particular, petroleum energy consumption among the energy consumption causes the emission of CO₂, NO_{X} and SO_{X}, which becomes environmental loads.

According to the conventional system, the production of the same products are usually concentrated into one factory (a manufacturing lodgment C). The products manufactured at the factory (manufacturing lodgment C) are transported to respective distribution lodgments around the country by, for example, trucks and then distributed to end users. This is characteristics of the conventional system. In such a distribution course, transport from the manufacturing lodgment C to each of the distribution lodgments D accounts for largest parts of the transport-related environmental loads. In other words, from the viewpoint of production and distribution, it is considered at present that transport has most room for the control of environmental loads. In a course from material shipment, part manufacturing and product manufacturing to product distributing to end users, transport from the concentrated manufacturing lodgment C to each of the distribution lodgments D account for largest parts of the transport-related environmental loads. This follows that large-scale trucks come and go to the area of the manufacturing lodgment C in a concentrated manner, thereby aggravating environment.

Probing into the disadvantage as stated above, the present invention proposes a location assessment method capable of reducing environmental loads and of improving the concentration of the environmental loads.

FIG. 1 is a future product life cycle proposed by the present invention. FIG. 1 does not show the process of acquiring raw materials. Here, reference symbol A denotes a material producing stage, B denotes a part manufacturing stage in which desired parts are manufactured using the material, C denotes manufacturing lodgments at which desired products are manufactured using the manufactured parts, D denotes central and local distribution lodgments (or distribution storages) into which the manufactured products are gathered, E denotes a retailer stage which is the final distribution destination from the distribution lodgments, F denotes a using stage in which a user buys a product from a retailer and uses or consumes it, and G denotes a waste disposal stage for finally disposing of the used products. In this embodiment, a plurality of manufacturing lodgments C are scattered and a treatment lodgment H is put prior to the final disposal stage G to thereby realize effective recycling.

As in the case of the conventional system, in this future product life cycle, the raw materials are processed into materials in the material producing stage A and transferred to the part manufacturing stage B by transport means such as trucks. In the part manufacturing stage B, desired parts are manufactured using the materials. The manufactured parts are transported to the manufacturing lodgments C using transport means such as trucks. Thus, the flow is basically the same as the conventional one; however, the future product life cycle differs greatly from the conventional one. That is, a plurality of manufacturing lodgments C are provided and located one by one in units of consumption regions.

Part factories are scattered around various areas and parts are gathered into the manufacturing lodgments C which are the final assembly factories, from these regional part factories by transport means such as trucks. Part processing factories are usually located in the vicinity of the manufacturing lodgments C. It is therefore expected that by scattering manufacturing lodgments C, part factories can be scattered accordingly.

In the manufacturing lodgments C, desired products are manufactured using the parts thus manufactured and transported. The resultant products are first gathered into the central and local distribution lodgments D by transport means such as trucks to deliver them to users. The manufacturing lodgments C are divided in units of consumption regions and the distribution lodgments D are also located in the consumption regions, respectively. For that reason, the products are transported and stored by the amount to which they are to be distributed within each of the consumption regions.

Receiving the order from the regional retailers, products are delivered from the corresponding regional distribution lodgments D to the distribution final stage, that is, regional retailer stage E by transport means such as trucks and the products are put on sale. The regional users F buy the products from the corresponding regional retailers and use them. The products turn into wastes over time after the user uses it. The wastes are transported to the treatment lodgment H from the users. The treatment lodgment H separate wastes between recyclable and non-recyclable ones. The recycle resources thus separated are carried on the recycling route including the material producing stage A, part processing stage B, manufacturing lodgments C and the like to be recycled thereafter. The non-recyclable wastes are transferred to the waste disposal G for finally disposing of the waste. In this stage, a waste collection vehicle such as a garbage wagon and a truck is used as transport means. The wastes are incinerated at the scavengery factory or carried to the waste land-filling place and land-filled.

As stated above, the future distribution course has a structure in which factory locations, storage locations and recycle and final waste disposal locations closer to the corresponding consumption regions keep cooperative relation with one another within the corresponding regions. With this, long-distance transport and cargo transport become unnecessary. As a result, it is expected that the consumption of energy by transport means can be dramatically reduced and environmental loads can be thereby greatly reduced.

In the future, the highest priority challenge is considered to be an improvement in environment. As measures to protect environment, manufactures will be required to reduce environmental loads in the product life cycle including treatment step.

According to the analysis of the present inventor, transport has most room for reducing environmental loads. To this end, there is no other choice but to adopt a form in which manufacturing lodgments are located closely to the corresponding consumption regions. In that case, the manufacturing lodgments are scattered around the country and materials and parts are supplied within the regions in accordance with the corresponding production lodgments. However, in determining factory locations, if environmental protection costs are planned not in view of other factors, that is, of productivity and economical efficiency, it is likely that companies involved will not be able to keep their business activities. Due to a limit to an economical burden which has to be paid by the consumers as a commodity value and which is imposed on the consumers, the impact of those other factors cannot be ignored.

In consideration of the above, the present invention proposes a method for assessing locations of transport lodgments capable of optimizing transport-related environmental loads in view of factors of productivity and economical efficiency. As a result, a life cycle relating to product manufacturing is established as shown in FIG. 1.

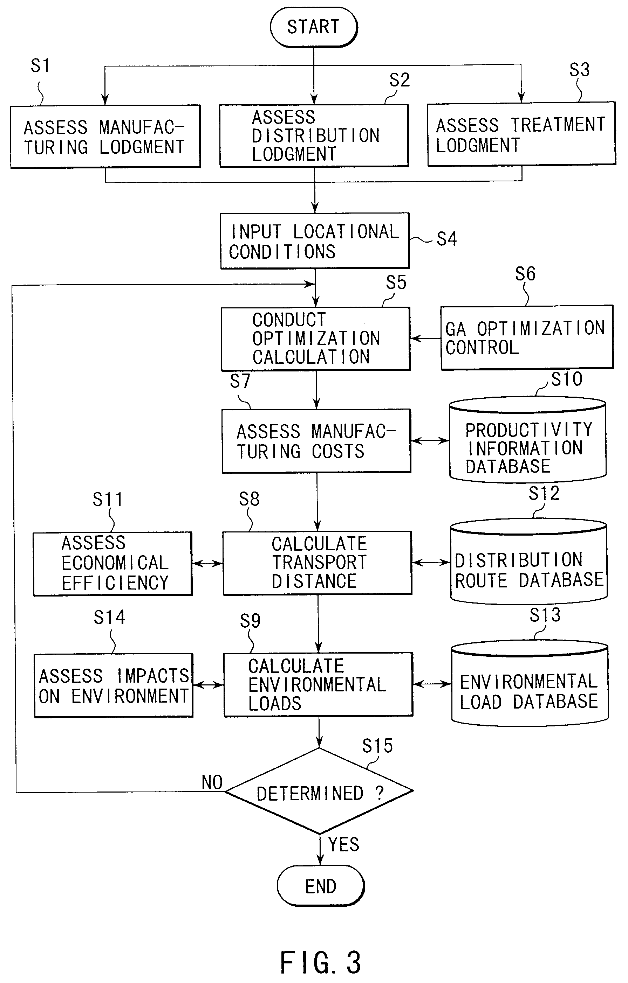

FIG. 3 is a flow chart showing processing procedures for assessing and determining locations of "manufacturing lodgments" at which products are manufactured, "distribution lodgments" at which products are concentrated into regions and delivered to corresponding end users, and "treatment lodgments" at which used products are collection/recycle processed. The processing procedures can be realized by programming and executing them by computers, or can be realized as a system by replacing processing functions in the procedures with hardware and executing the hardware.

In this embodiment, an optimum combination of manufacturing lodgments, distribution lodgments and waste disposal lodgments is determined by means of the GA method while considering environmental loads. It is noted that if some proposed manufacturing lodgments closely located to corresponding regions are already determined, it is possible to determine distribution lodgments and waste disposal lodgments based on the proposed production lodgments. Alternatively, if not only proposed manufacturing lodgments but also proposed waste disposal lodgments are already determined, it is possible to determine distribution lodgments based on the proposed production and waste disposal lodgments.

If proposed manufacturing lodgments C are required to be selected first, preparation procedures for manufacturing lodgment assessment are executed (in step S1). If proposed distribution lodgments D are required to be selected first, preparation procedures for distribution lodgment assessment are executed (in step S2). If proposed treatment lodgments H are required to be selected first, preparation procedures for treatment lodgment assessment are executed (in step S3).

If proposed manufacturing lodgments located closely to regions are already selected and distribution lodgments and waste disposal lodgments are to be selected, steps (S2) and (S3) are executed and various conditions other than those for distribution lodgments and waste disposal lodgments are inputted.

If preparation is made, necessary locational conditions such as dimensions of buildings and land price per tsubo (3.954 sq. yds) of a proposed region or a plottage are inputted (in step S4) and, based thereon, optimization-calculation is conducted using the GA (in steps S5 and S6). The optimization calculation employs a GA optimization control function using the genetic algorithm to be described later.

In optimization calculation, it is determined which proposed lodgments are more appropriate by comparing two or more proposed lodgments and calculation is repeated to thereby output finally an optimum combination of the proposed lodgments. At this time, use of the GA to be described later can help output the combination appropriately and at high speed.

In the optimization calculation, a production cost assessment step S7, a transport distance calculation step S8 and an environmental load calculation step S9 are carried out as necessary.

The production cost assessment step S7 is important since the impact of production costs on productivity cannot be ignored by companies involved and consumers if locations of factories are scattered. In the environmental load calculation step S9, the amount of environmental load factors such as the amount of emission gas is calculated based on the transport distance between the proposed lodgments which are obtained as a result of the transport distance calculation step S8 and on transport means. In the optimization calculation step S5, such a combination of lodgments as to finally provide high productivity and minimize environmental loads is obtained by the optimization processing including the GA.

In the transport distance calculation step S8, an economical efficiency evaluation step S11 is included. In step S11, economical efficiency is assessed. This is important since the transport distance is not always proportional to economical efficiency. For example, if a distribution route involves passage of urban areas, such factors as the influence of traffic backup and the like and road widths, that is, transport efficiency (a ratio of transport time to transport distance) causes a deterioration in economical efficiency. If the result of the transport distance calculation in step S8 is not corrected, the environmental load calculation step S9 cannot be accurately carried out.

A distribution route database in step S12 stores digitized map information and economical efficiency information on surrounding regions (such as information on road widths, urban areas, express ways, population, environmental standard and traffic backup) for the calculation of the transport distance and the assessment of economical efficiency.

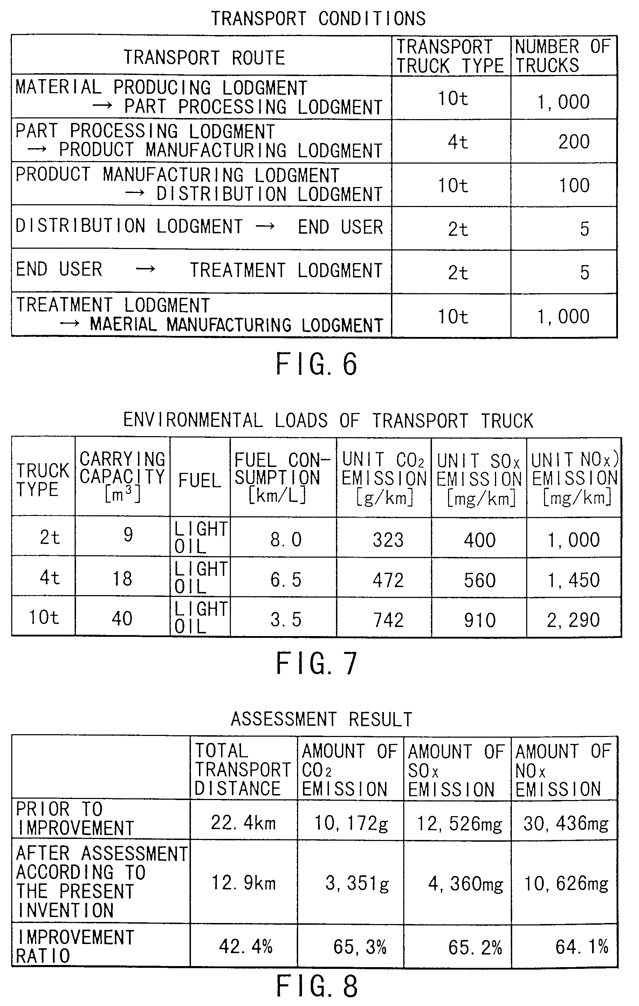

The environmental load calculation in step S9 is carried out using an environmental load database in step S13. The environmental load database in step S13 stores environmental load coefficients based on the difference in used distribution means (information on, for example, the amounts of air pollutants or environmental loading factors within emission gas as shown in FIGS. 6 and 7). Environmental influence assessment is conducted for every calculation (in step S14). Finally, optimum candidates are outputted (in step S15).

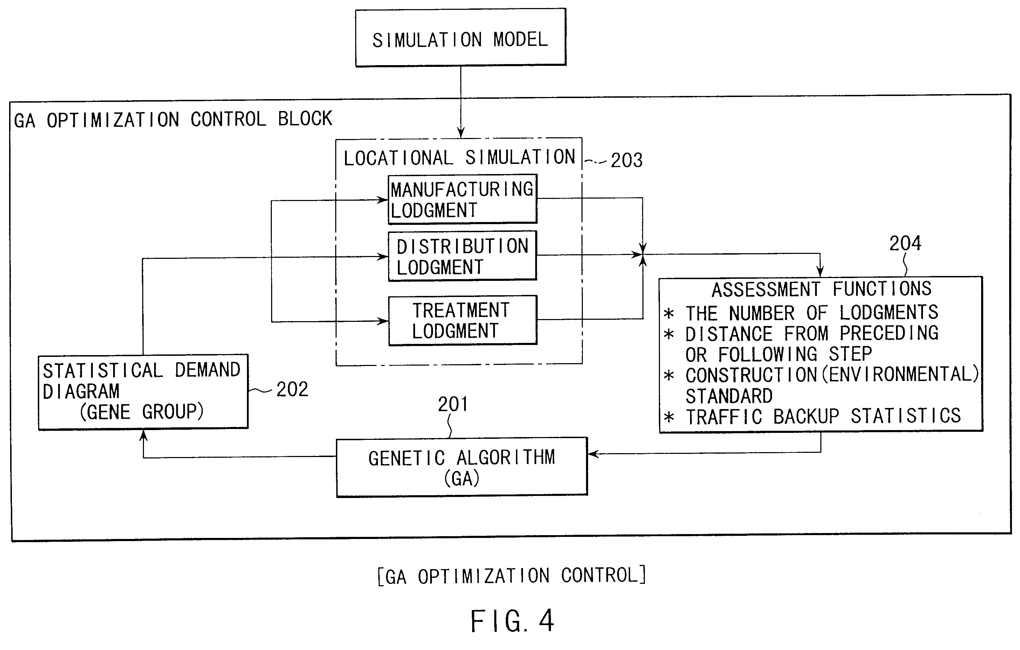

FIG. 4 shows the detail of the GA optimization control step S6. The GA optimization control step S6 is to conduct optimization control using the GA for the purpose of optimizing locations. It can be realized using the processing function of hardware or that of software.

The GA optimization control in step S6 includes a GA calculation function 201 for optimization control. As well known, the GA is an algorithm obtained based on the principle of biological evolution. It is known as one of stochastic search, learning and optimization methods and is applied to, for example, the temperature control of an air-conditioner and minimize for investigation points of soil contamination under the petroleum tank.

The GA optimization in this embodiment is characterized in that it is applicable to determining an optimum location in the calculation of a complex transport distance between two points around an arbitrary point.

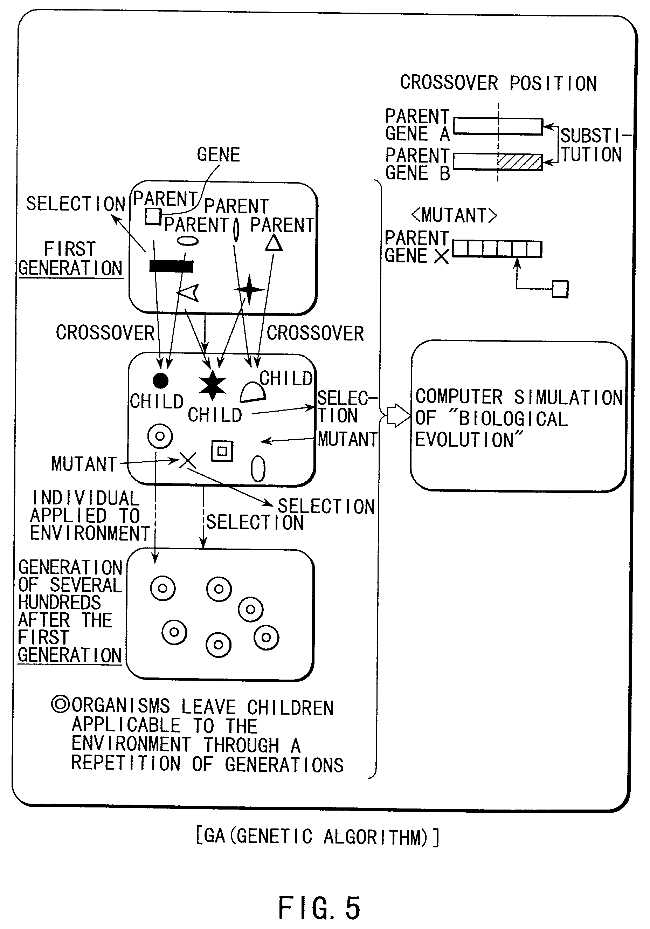

FIG. 5 shows the concept of the genetic algorithm (GA). In the GA, a plurality of parents having various types of genes exist and various types of children having part of their genes substituted by other genes are generated by the combination of the parents. Substitution of part of genes with others is called crossover. The child grows into a parent and generates next-generation children. At this time, completely different genes are partly rearranged into the gene of the parent at a predetermined probability or on a random basis per several generations to generate a mutant.

From among children of respective generations, those with good conditions are selected and the remaining children are abandoned, thus determining an excellent child as a parent of the next generation. By repeating such process, children applicable to the environment or fit to conditions are obtained.

As is obvious from the above, organisms are result of an algorithm in which the process of evolution that children suited for the environment are left through a repetition of generations, is applied into processing logic, which algorithm is employed as one of stochastic search, learning and optimization methods.

In the GA optimization control step S6, as shown in FIG. 4, statistic demand diagram (gene group) 202, a control simulation model 203 and an assessment function 204 are included. The statistic demand diagram (gene group) 202 is statistical information on demand obtained as a result of the execution of the GA and corresponds to the child group in the GA.

The control simulation model 203 simulates locations such as "production lodgments", "distribution lodgments" and "treatment lodgments" using the information on the statistical demand diagram 202. As a result of the execution of the location simulation, "the number of lodgments", "relevant course (path)", "construction (environmental) standard", "traffic breakup prediction" (economical efficiency data) and the like are obtained as assessment functions 204. The GA 201 carries out selection and evolution to improve the values of assessment functions using the assessment functions 204 and creates a new statistical demand diagram 202.

In a locational condition input step S4, a provisionally proposed regions are designated. Based on this, locations of manufacturing lodgments C, distribution lodgments D and treatment lodgments H are simulated using the GA (in steps S5 through S15), thus deducing the best solution (locations having good assessment functional values).

In the above-stated transport distance calculation step S8, the transport distance from "a material producing factory" to "a part processing factory", that from "the part processing factory" to "a product manufacturing lodgment", that from "the product manufacturing lodgment" to "a distribution lodgment", that from "the distribution lodgment" to "an end user", that form "the end user" to "a treatment lodgment" and that from "the treatment lodgment" to "the material producing factory (or part processing factory, the product manufacturing lodgment or the like) as well as the "total transport distance" are calculated.

In the environmental load calculation step S9, the amounts of emission of CO₂, SO_{X} and NO_{X} on each of trucks used in the respective distances are calculated. For example, a database as shown in FIG. 7 is prepared and, using the database, the amount of emission of each of CO₂, SO_{X} and NO_{X} which are environmental pollutants influencing the fuel exhaustion of a transport truck on each course (path) is calculated.

The "environmental load calculation" is also disclosed in the U.S. Pat. Appln. No. 86606 proposed by the present inventor. The amounts of the CO₂, SO_{X} and NO_{X} emissions relating to the fuel exhaustion of a transport truck on each course can be calculated by using an environmental load assessment program which contain the environmental load database as described in this application.

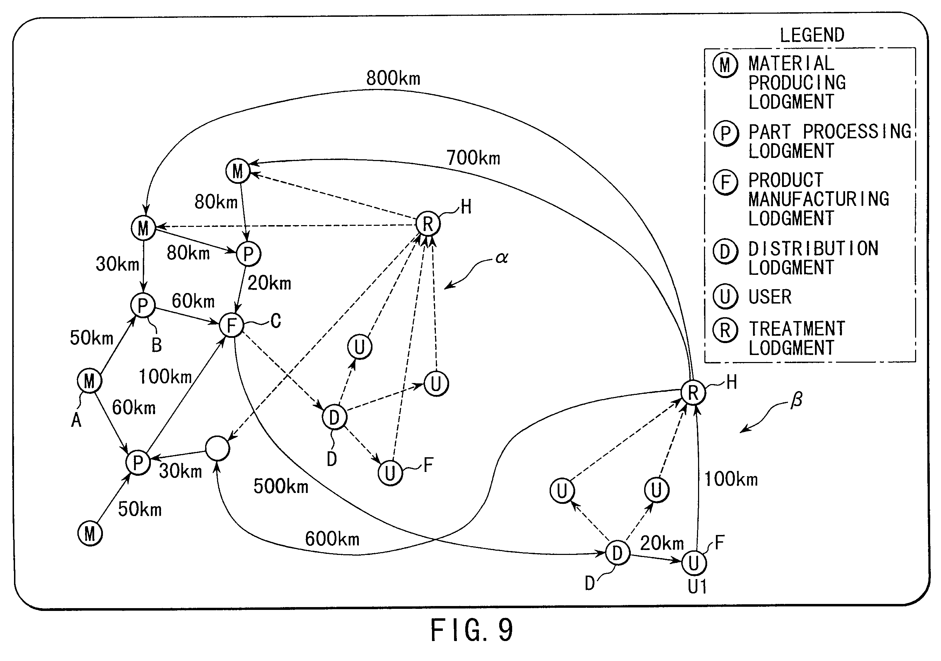

Examples of environmental load reductions in a case where manufacturing lodgments C, distribution lodgments D and treatment lodgments H are determined by the assessment system with the above structure will be described with reference to FIGS. 9 through 12.

FIG. 9 is a typical view showing an example of the product flow in the conventional production system in which lodgments are determined from economical viewpoints without deeply considering environmental loads.

In FIG. 9, round-marked "U" denotes a user, a round-marked "M" denotes a material producing lodgment, a round-marked "P" denotes a part processing factory, a round-marked "F" denotes a final product manufacturing lodgment, a round-marked "T" denotes a distribution lodgment and a round-marked "R" denotes a treatment lodgment.

In FIG. 9, arrows connecting the lodgments denote transport directions and the numbers denote transport distances, respectively. The conventional system is characterized in that a region a in which the product manufacturing lodgment is located is away from a consumption region β of a user u1. Now, the environmental loads of the product that the user u1 ("U") uses will be calculated.

As shown in FIG. 6, transport conditions are as follows:
- Transport route "from the material producing lodgment to the part processing factory": 1,000 10-ton trucks
- Transport route "from the part processing factory to the product manufacturing lodgment": 200 4-ton trucks
- Transport route "from the product manufacturing lodgment to the distribution lodgment": 100 10-ton trucks
- Transport route "from the distribution lodgment to the end user": five 2-ton trucks
- Transport route "from the end user to the treatment lodgment": five 2-ton trucks
- Transport route "from the treatment lodgment to the material producing lodgment": 1,000 10-ton trucks

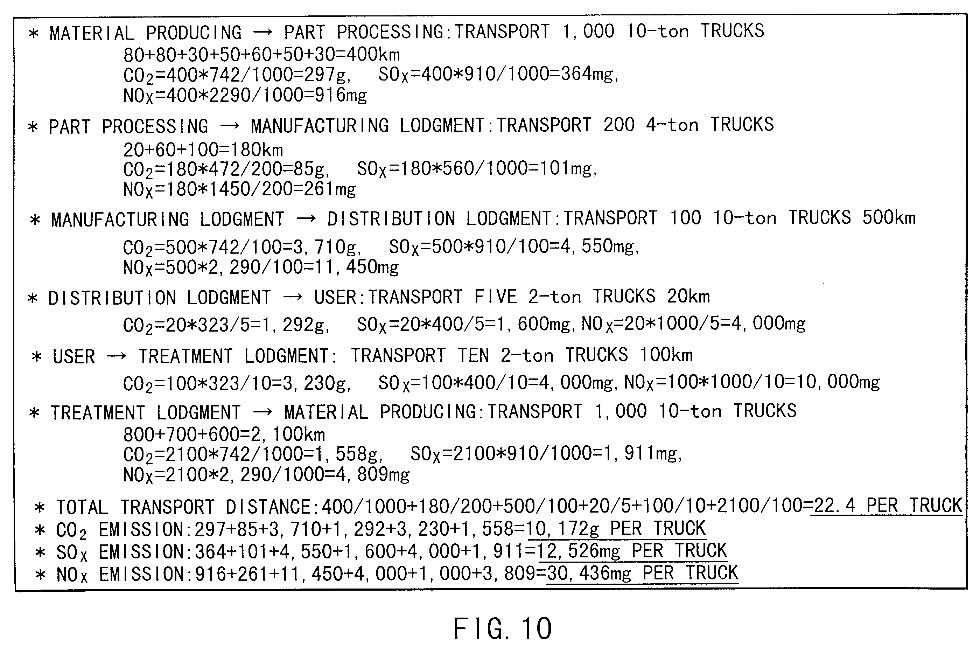

If products, parts and their materials are distributed on the convention system shown in FIG. 9 under these conditions of FIG. 6, the total transport distance of the product used by the user u1 amounts to 22.4 km (that is, (material producing - part processing 400 [km] / 1,000 trucks) + (part processing - manufacturing lodgment 180 [km] / 200 trucks) + (production lodgment - distribution lodgment 500 [km] / 100 trucks) + (distribution lodgment - user 20 [km] / 5 trucks) + (user - treatment lodgment 100 [km] / 10 trucks) + (treatment lodgment - material manufacturing 2,100 [km] / 1,000 trucks) = 22.4 [km]). The environmental loads on each course are CO₂: 10,172 [g]; SO_{X}: 12,526 [mg]; and NO_{X}: 30,436 [mg] according to the environmental load database shown in FIG. 7 (refer to FIG. 10 for calculation details).

The data of FIG. 7 prepared as a database is environmental load information on transport trucks. It is reliable data since it is actually counted, measured and calculated statistically. The data shows the following:
- 2-ton truck - carrying capacity: 9 [m²]; fuel: light oil; fuel consumption: 8.0 [km/l]; CO₂ unit requirement: 323 [g/km]; SO_{X} unit requirement: 400 [mg/km]; and NO_{X} unit requirement: 1,000 [mg/km]
- 4-ton truck - carrying capacity 18 [m²]; fuel: light oil; fuel consumption: 6.5 [km/l]; CO₂ unit requirement: 472 [g/km]; SO_{X} unit requirement: 560 [mg/km]; and NO_{X} unit requirement: 1,450 [mg/km]
- 10-ton truck - carrying capacity 40 [m²]; fuel: light oil; fuel consumption: 3.5 [km/l]; CO₂ unit requirement: 742 [g/km]; SO_{X} unit requirement: 910 [mg/km]; and NO_{X} unit requirement: 2,290 [mg/km]

Next, description will be given to environmental loads in case of optimizing transport lodgments by the method according to the present invention.

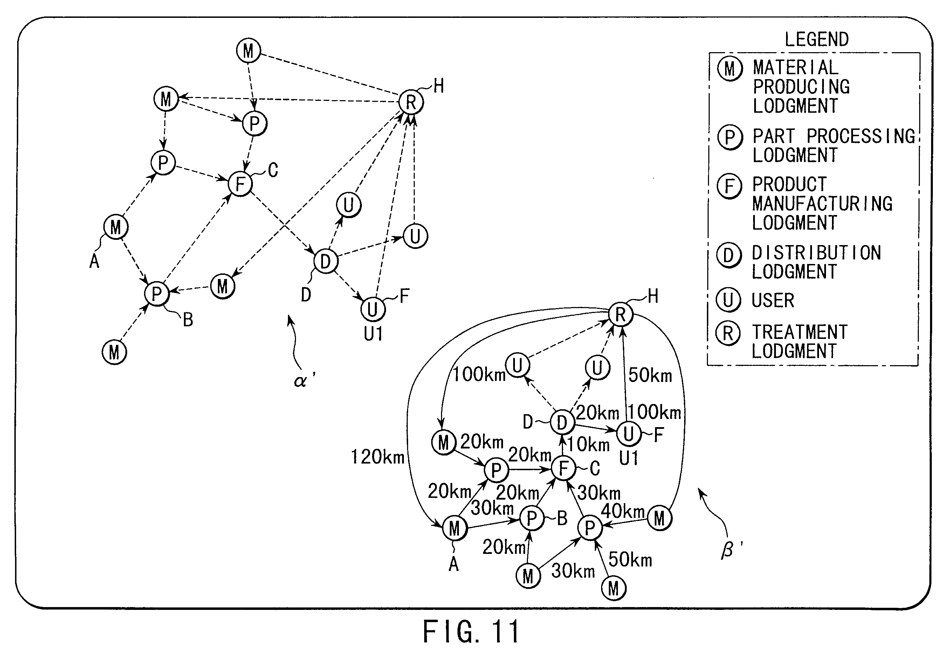

FIG. 11 shows a state in which transport lodgments have been optimized by the method according to the present invention. This state is characterized in that manufacturing lodgments C are provided not only in the area a but also in the area β of the consumer u1 and that distribution lodgment D and the treatment lodgment H are also provided around the area β. It is noted that the transport conditions shown in FIG. 6 are applied hereto.

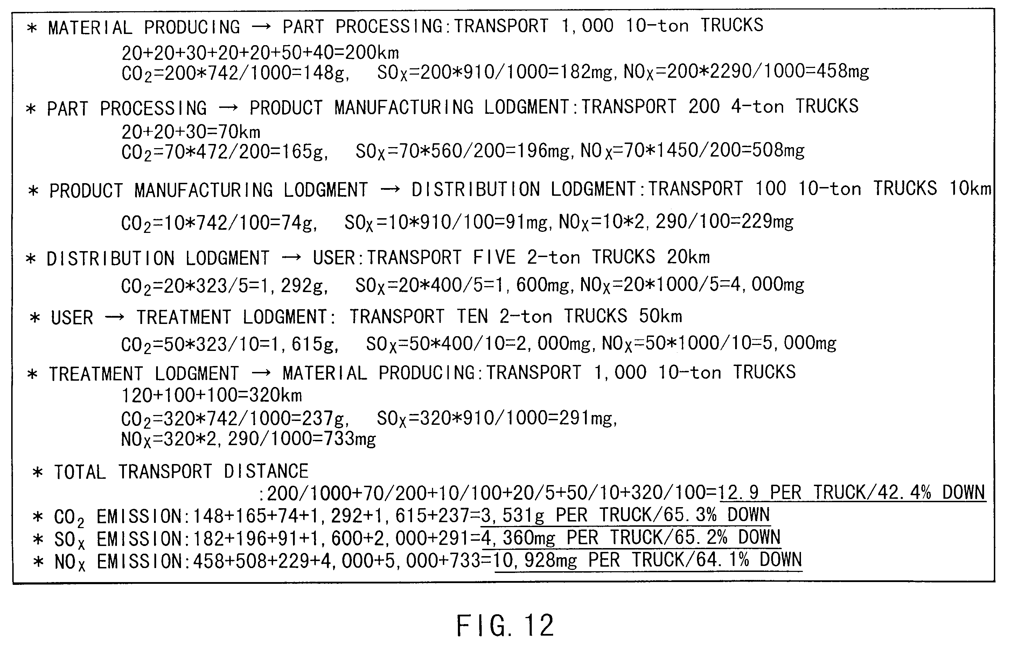

According to the locational relationship obtained by the optimization, the total transport distance amounts to 12.9 [km], and the environmental loads, that is, CO₂ is 3,531 [g], SO_{X} is 4,360, and NO_{X} is 10,928 [mg] as a result of the same calculation as the conventional one (refer to FIG. 12 for calculation details).

The result of comparison with the conventional system is illustrated by FIG. 8. Specifically, "total transport distance", "amount of CO₂ emission", "amount of SO_{X} emission" and "amount of NO_{X} emission" are "22.4 [km]", "10,172 [g]", "12,526 [mg]" and "30,436 [mg]", respectively for prior-to improvement, whereas they are "12.9 [km]", "3,531 [g]", "4,360 [mg]" and "10,626 [mg]" for after assessment according to the present invention, respectively. If comparing the result according to the present invention with that under the conventional system (FIG. 10), improvement ratios are "42.4 [%]", "65.3 [%]", "65.2 [%]" and "64.1 [%]", respectively. Thus, according to the comparison result of the total transport distance: "42.4 [%]", CO₂: "65.3 [%]", SO_{X}: "65.2 [%]" and NO_{X}: "64.1 [%]", it is discovered that the present invention advantageously marked a distinct improvement.

Only the distribution loads are assessed while both economical efficiency and the environmental loads due to a pluralized manufacturing lodgments C are considered constant. It is however necessary to take into account originally, as the total life cycle assessment, the assessment of the economical efficiency and environmental impact due to changes in production steps and production lots. Nevertheless, it is certain that transport costs occupying large parts of the product treatment cost incurred after waste disposal or recycling costs can be greatly reduced. The product treatment cost reduction is the highest priority for the establishment of the circulatory society.

It should be noted that the present invention is not limited to the above-stated embodiment. It can be applied to a case where transport means other than a truck is used or to the current social system which has not yet transformed into the circulatory economic society.

Furthermore, assessment target products are not limited to commercial products but can be applied to indent products as necessary.

Moreover, it is possible to input locations of treatment lodgments H for recycling in advance and, based thereon, to optimize manufacturing lodgments and distribution lodgments. It is also possible to input locations of distribution lodgments in advance and, based thereon, to optimize manufacturing lodgments and treatment lodgments H.

In addition, various modifications are possible such as a method for setting two arbitrary points, conducting the above-stated calculation, comparing the two points and repeatedly comparing the better of the two with another arbitrary point without using GA control for the selection of optimum points.

Further, the method described in this embodiment can be distributed by storing it as a computer executable program in a storage medium such as a magnetic disc (e.g., a floppy disc and a hard disc), an optical disc (e.g., CD-ROM and DVD) and a semiconductor memory.

According to the present invention described so far, it is possible not only to assess and optimize locations of the product manufacturing lodgments, distribution lodgments and treatment lodgments using the LCA method, but also to streamline the distribution system, effectively reduce transport costs, relax traffic breakup and to curb air pollution.

## Claims

1. A method for optimizing locations of transport lodgments relating to manufacturing of a product, characterized by comprising:
a first step (S9) of calculating loads that transport relating to the product applies to environment, the transport being conducted among transport lodgments (A, B, C, D, E, F); and
a second step (S5) of optimizing locations of the transport lodgments to reduce the loads applied to the environment.

2. The method according to claim 1, characterized in that
the transport lodgments optimized in the second step (S5) include at least a manufacturing lodgment (C) and a distribution lodgment (D); and
in said second step (S5), a location of at least one of said manufacturing lodgment (C) and said distribution lodgment (D) is obtained by an optimization method to reduce the loads that the transport relating to the product applies to the environment.

3. The method according to claim 2, characterized in that
a location of a proposed manufacturing lodgment (C) located closely to a consumption region (F) is inputted in advance; and
in said second step (S5), a location of said distribution lodgment (D) is obtained by the optimization method to reduce the loads that the transport relating to the product applies to the environment, based on the location of the proposed manufacturing lodgment (C).

4. The method according to claim 1, characterized in that
said transport lodgments include at least a manufacturing lodgment (C), a distribution lodgment (D) and a waste disposal and recycle lodgment (H) to dispose of and recycle the product; and
in said second step (S5), a location of at least one of said manufacturing lodgment (C), said distribution lodgment (D) and said waste disposal and recycle lodgment (H) is obtained by an optimization method to reduce the loads that the transport relating to the product applies to the environment.

5. The method according to claim 4, characterized in that
a proposed manufacturing lodgment (C) located closely to a consumption region (F) is inputted in advance; and
in said second step (S5), a location of at least one of said distribution lodgment (C) and said waste disposal and recycle lodgment (H) is obtained by the optimization method to reduce the loads that the transport relating to the product applies to the environment, based on the location of the proposed manufacturing lodgment (C).

6. The method according to claim 1, characterized in that
said optimization method in said second step includes optimization control (S6) based on a genetic algorithm.

7. The method according to claim 1, characterized in that
the first step (S9) includes:
a step (S8) of calculating a transport distance of a transport route connecting the transport lodgments; and
a step (S9) of obtaining an amount of an environmental load factor emitted by transport means based on transport capacity and the transport means and of calculating loads applied to the environment based on the amount of the environmental load factor.

8. The method according to claim 7, characterized in that
said first step (S9) includes a step (S11) of assessing economical efficiency of the transport route connecting the transport lodgments.

9. The method according to claim 8, characterized in that
in said economical efficiency assessment step (S11), economical efficiency is assessed with reference to data (S12) on transport time relative to the transport distance.

10. The method according to claim 1, the method characterized by further comprising a step (S7) of assessing a productivity cost based on a location of a manufacturing lodgment (C) from among the transport lodgments to optimize the transport lodgment prior to the second step.
